# EUROPEAN PATENT SPECIFICATION

(11) **EP 1 864 447 B1**
(45) Date of publication and mention of the grant of the patent: **25.02.2009**
(21) Application number: 06725443.3
(22) Date of filing: 30.03.2006
(51) Int. Cl.: H04L 12/56

(54) **AN ACCESS METHOD FOR A MULTI-HOP WIRELESS NETWORK**
ZUGANGSVERFAHREN FÜR EIN DRAHTLOSES MEHRSPRUNG-NETZWERK
PROCEDE D'ACCES DESTINE A UN RESEAU SANS FIL A PLUSIEURS BONDS

(30) Priority: 31.03.2005 CN 200510059759; 31.03.2005 CN 200510059758
(43) Date of publication of application: 12.12.2007
(73) Proprietor: SIEMENS AKTIENGESELLSCHAFT, 80333 München (DE)
(72) Inventor: LI, Hui Chateau Regency E802, Beijing 100102 (CN); YU, Dan R.13-1-502, Yi Mei Jia Yuan, Beijing 100085 (CN)
(86) International application number: PCT/EP2006/061195
(87) International publication number: WO 2006/103276

(56) References cited:
- EP-A- 1 134 940
- WO-A-03/055253
- US-A1- 2002 145 978
- US-A1- 2002 187 746

## Description

### Technical Field

This invention relates to an access method for a multi-hop wireless network, and more particularly, to an access method for a multi-hop wireless network in a beyond third generation/fourth generation (B3G/4G) mobile communication system.

### Background Art

As the third generation (3G) mobile communication is starting its commercial application, it has come to the pre-development stage for B3G/4G technology of higher speed, higher frequency spectrum efficiency, better coverage and more powerful business supporting capabilities; it has been planned to complete the frequency allocation by 2007, to accomplish major criteria by 2010, to start commercial application by 2012 and to put into large-scale commercial application by 2015. The demand for frequency spectrum by B3G systems should be at least 600 MHz. As currently available frequency bands do not meet this demand, higher frequency bands will be allocated to B3G and 4G systems.

Although relatively high frequency bands can solve the frequency allocation problem for B3G systems, the higher the frequency band, however, the poorer the electromagnetic wave's mobility or penetrating capabilities will be. In this case, the electromagnetic waves would get closer and closer to straight line propagation, and if there were buildings, there would be many "shadowy" areas in a cell, beyond the reach of the electromagnetic waves. For example, if a mobile node (MN) is behind a building, due to the signals' poor capability to get around, signals would not be able to reach the mobile node by going around the building, furthermore, due to the signals' poor penetrating capability, the signals would not be able to reach the mobile node by going through the building, therefore this mobile node may not be able to receive signals coming from a base station.

Furthermore, the higher the frequency band, the higher the attenuation of the electromagnetic waves will be, and hence the transmitting power will attenuate. The transmitting power attenuation of a base station would lead to a reduced coverage range in a cell, or if the coverage range is not changed, it would lead to less ideal power control at the cell's edge, which would cause many transmitting errors. Also, because people wish to reduce the influence of electromagnetic radiation on the human body, a base station's transmitting power would have to be reduced, which would further aggravate the problem of less ideal power control at the cell's edge.

One solution to the above problem is to re-divide the honeycomb cells so that the original cells can be reduced to the range that can be covered by the base station power, and then to set up one base station in each size-reduced cell. However, this method requires connecting each base station by optical fibers, which is very inconvenient in practice. When the optical fibers have to pass through areas which are private or through other areas impractical for laying optical fibers, the inconvenience is greater still.

For this reason, there exists in the field of wireless communication the concept of a multi-hop network, in which a relay node (RN) is added between a base station and a mobile node so as to form a route of base station - relay node - mobile node. There may be only one of the above mentioned relay nodes but there can also be many of them. With such a multi-hop network the power needed by each relay node is significantly reduced, since one node in a multi-hop network only needs enough transmitting power to reach an adjacent node. Secondly, due to the very low power at each node in a mesh network, the equipment at different parts of a network can actually transmit simultaneously at the same frequency without causing any interference. Such duplicated use of frequency increases the network's space capacity, and the short distances between nodes lead to an increased network bandwidth.

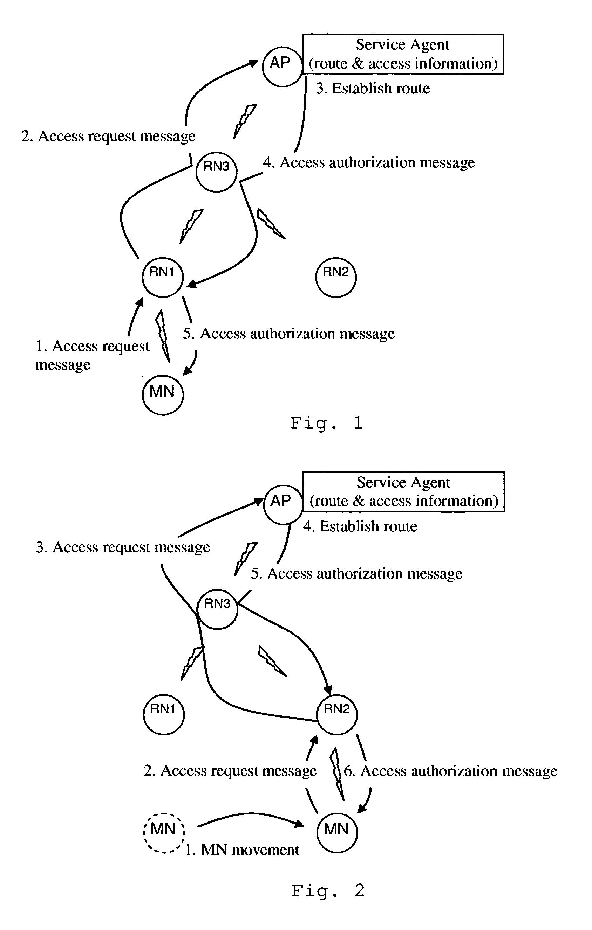

Fig. 1 is an illustrative signalling flowchart for a mobile node to be connected for the first time into a multi-hop network in the prior art. The mobile node MN in the figure first transmits an access request message to the nearest relay node RN, which relay node relays said access request message to the next relay node, until said access request message is relayed to an access point (AP); the access point AP is connected to a service agent (SA), which service agent SA contains route and access information. If the service agent SA authenticates the information from the mobile node as legal, it would inform the access point AP, and AP would then establish a route for returning a message to the mobile node. Then the AP transmits an access authorization message to a relay node by the selected route, and the relay node relays this access authorization message to the next relay node until this access authorization message is relayed to said mobile node.

Fig. 2 is an illustrative signalling flowchart for the mobile node, after having moved, to be connected into the multi-hop network in the prior art. The dashed line mobile node MN in the figure represents its position before the movement, the mobile node MN first moves in the direction shown by the arrow, then the mobile node MN transmits an access request message to the nearest relay node RN, which relay node relays said access request message to the next relay node, until said access request message is relayed to the access point AP; the access point AP is connected to the service agent SA, which service agent SA contains route and access information. If the service agent SA authenticates the information from the mobile node as legal, it would inform the access point AP, and AP would then change the route for returning a message to the mobile node. Then the AP transmits an access authorization message to a relay node by the changed route, which relay node relays this access authorization message to the next relay node until this access authorization message is relayed to said moved mobile node.

However, because there are many nodes, when a mobile node is accessing a multi-hop network, the processing of encoding, decoding and routing information has to be performed via a network layer, an access layer and a physical layer at every one of the access point AP, relay nodes RN and the mobile node MN. The network accessing time and the access delay would therefore be quite long, which would be disadvantageous to a mobile node's seamless access during its movement.

EP 1 134 940 A1 discloses an ad-hoc mobile network in which a geometry based routing protocol (GRP) is used to route traffic from a source node to a destination node.

### Contents of the Invention

An object of this invention is to provide an access method for a multi-hop wireless network, so that when a mobile node moves from one cell into another cell, the access speed can be improved by using this method to ensure that the communication data, especially the voice data, are not interrupted.

To achieve the above object, the technical solution of this invention is realized as follows: an access method for a multi-hop wireless network, to be used in a distributed multi-hop wireless network, which network comprising an access point, a service agent connected to said access point, at least one relay node and at least one mobile node, characterized in that said method comprises the following steps of:
(1) informing, by said at least one mobile node at the time of its registration in said wireless network, to at least one relay node adjacents to said mobile node of access information for acquiring access authorization relevant to said mobile node;
(2) storing the access information relevant to said mobile node in said at least one relay node adjacent to said mobile node;
(3) informing, by said at least one relay node, all the other relay nodes adjacent to said mobile node of said access information relevant to said mobile node, or informing, by said relay node, at least one relay node that is predicting the movement of said mobile node in its vicinity of said access information relevant to said mobile node ;
(4) transmitting by said mobile node an access request message to a relay node adjacent to said mobile node;
(5) returning to said mobile node an access authorization message by said adjacent relay node having received the access request message;
(6) transmitting a route update message by said adjacent relay node to a next relay node, and relaying said route update message in turn by said next relay node to other relay nodes until said route update message is relayed to said access point;
(7) performing route update by said access point or said service agent.

The technical solution by this invention can also be realized as follows: an access method for a multi-hop wireless network, to be used in a centralized multi-hop wireless network, said network comprising an access point, a service agent connected to said access point, at least one relay node and at least one mobile node, characterized in that said method comprises the following steps of:
(1) informing, by said at least one mobile node at the time of its registration in said wireless network, said access point of the access information for acquiring access authorization relevant to said mobile node;
(2) storing the access information relevant to said mobile node in said access point or said service agent;
(3) informing, by said access point, all the relay nodes adjacent to said mobile node of said access information relevant to said mobile node, or informing, by said access point, at least one relay node that is predicting the movement of said mobile node in its vicinity of said access information relevant to said mobile node;
(4) transmitting by said mobile node an access request message to a relay node adjacent to said mobile node;
(5) returning to said mobile node an access authorization message by said adjacent relay node having received the access request message;
(6) transmitting a route update message by said adjacent relay node to a next relay node, and relaying said route update message in turn by said next relay node to other relay nodes until said route update message is relayed to said access point;
(7) performing route update by said access point or said service agent.

Wherein, after said relay node has stored the access information relevant to said mobile node, it deletes the received access information; or after having received a delete signal issued by a relay node in current contact with said mobile node, said relay node deletes the received access information. After said relay node has stored the access information relevant to said mobile node, the time to delete the received access information is set by said relay node or said access point.

In addition, the manner of said informing is by way of broad-cast, multicast or unicast.

It can be seen that the method provided by this invention has the following advantages:
(1) The access method for a multi-hop wireless network provided by this invention has moved the access information originally located in the network's service agent to a relay node adjacent to a mobile node, so that when the mobile node is being connected, it no longer needs to acquire the access authorization message from the access point, but only to acquire the access authorization message from an adjacent relay node, which has greatly re duced the transmission of the access signal and greatly reduced the mobile node's access time.
(2) The access method for a multi-hop wireless network provided by this invention enables seamless access by a mobile node during high speed movement or operating from one cell to another cell, which is very important for data transmission, especially voice data transmission, in a B3G network, so that a user does not experience the phenomenon of temporary interruption during a conversation, and the voice quality can be kept clear all the time.
(3) The access method for a multi-hop wireless network provided by this invention only needs to set a storage area at a relay node in the network for storing the access information corresponding to each mobile node, so the changes made to the current technical equipment are small and they save costs.
(4) The access method for a multi-hop wireless network provided by this invention would not affect the application of the existing technology, so if the latest access information cannot be obtained by using this method, access can still be made by following the method of the existing technology, therefore it is compatible with the existing technology.

### Description of the Drawings

Fig. 1 is an illustrative signalling flowchart for a mobile node to be connected for the first time into a multi-hop network in the prior art. In this figure, MN is a mobile node, RN is a relay node and AP is an access point.
Fig. 2 is an illustrative signalling flowchart for the mobile node, after having moved, to be connected into a multi-hop network in the prior art.
Fig. 3 is an illustrative signalling flowchart for a mobile node, after having moved, to be connected into a multi-hop network, which is a distributed multi-hop wireless network, in a first embodiment of this invention.
herein belowFig. 4 is an illustrative signaling flowchart for a mobile node, after having moved, to be connected into a multi-hop network, which is a centralized multi-hop wireless network, in a second embodiment of this invention.

### Practical Embodiments

A prerequisite of the present invention is that a multi-hop network is used in B3G and 4G wireless mobile communication networks, wherein a base station is usually referred to as an access point AP, and a relay node RN is added between the access point and mobile node. There may be only one of the above relay nodes RN, or there can be many. At the network's access point AP, there is a service agent SA, which service agent stores the route information for the mobile node MN. Said service agent SA can also be located at any other position in the network connected to the access point.

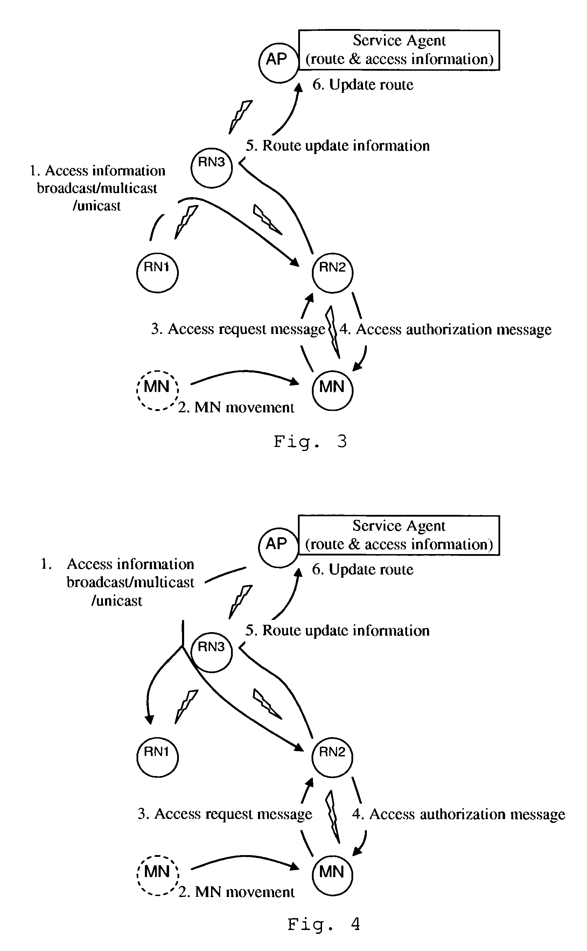

Fig. 3 is an illustrative signaling flowchart for a mobile node, after having moved, to be connected into a multi-hop network, which is a distributed multi-hop wireless network, in a first embodiment of this invention.

In Fig. 3, MN is a mobile node, such as a mobile station or a notebook computer with a wireless network card. The dashed line in Fig. 3 is the mobile node's initial position.

The mobile node is turned on to register in the network, and at the same time at least one relay node adjacent to said mobile node, such as the relay node RN1 above the dashed line, is informed of the access information relevant to this mobile node; the relay node retains a copy of the access information relevant to this mobile node, i.e. the access information relating to this MN is stored in RN1, and at the same time AP is informed of the registration information relevant to this mobile node.

Relay nodes adjacent to RN1, such as RN2 and RN3 are monitoring and predicting MN's movement; if one or several adjacent relay nodes have predicted MN's movement in their vicinity, RN1 would inform the one or several relay nodes of this MN's access information; or if the adjacent relay nodes are not required to predict MN's movement, RN1 can inform all the adjacent relay nodes RN2 and RN3 of this MN's access information. The manner of informing can be by way of broadcast, or it can also be by multicast or unicast.

The mobile node MN moves from its initial position, after which movement the relay node most adjacent to MN is RN2. Since RN2 has monitored MN's movement, RN1 informs RN2 of MN's access information, or RN1 informs adjacent relay nodes (including RN2) of MN's access information.

The mobile node MN transmits to the closest relay node RN2 an access request message, since RN2 has already stored the access information for this mobile node MN, RN2 can immediately return an access authorization message to this mobile node MN.

The relay node RN2 transmits a route update message to the next relay node RN3, and RN3 relays this route update message to the access point AP.

The above access point AP performs route updating, and stores the updated route information in the service agent SA connected with said AP.

After having stored the access information relating to this mobile node in the relay node RN1 for some time, the received access information is deleted, and this time period can be set by the relay node; or after receiving a delete signal issued by the relay node RN2 which has current contact with said mobile node, the relay node RN1 deletes the stored access information relating to this MN.

Assuming that after the mobile node MN's movement the relay node RN2 closest to MN does not have this MN's latest access information, this MN would transmit an access request message to its other adjacent relay nodes. If the other relay nodes adjacent to this MN do not have this MN's latest access information either, MN would transmit the access request message to RN2, and RN2 would then relay this access request message to other adjacent relay nodes, until this access request message is sent to the access point AP, hence following the flowchart of the prior art shown in Fig. 1 to accomplish the access.

Fig. 4 is an illustrative signaling flowchart for a mobile node, after having moved, to be connected into a multi-hop network, which is a centralized multi-hop wireless network, in a second embodiment of this invention.

In Fig. 4, MN is a mobile node, such as a mobile station or a notebook computer with a wireless network card. The dashed line in Fig. 4 is the mobile node's initial position.

The mobile node is turned on to register in the network, at the same time the access point AP is informed of the access information relevant to this mobile node; and AP sends a notice to relay nodes adjacent to the mobile node MN, such as RN1 and RN2, to inform them of the access information relating to this MN. Then RN1 and RN2 store the access information relating to this MN separately.

One or several relay nodes adjacent to RN1, such as RN2 and RN3 are monitoring and predicting MN's movement; assuming that RN2 has predicted MN's movement in its vicinity, the access point AP would inform RN2 of this MN's access information; or if the adjacent relay nodes are not required to predict MN's movement, the access point AP can inform the relay nodes RN1 and RN2 adjacent to this MN directly of the MN's access information. The manner of informing can be by way of broadcast, or it can also be by multicast or unicast.

The mobile node MN moves from its initial position, after which movement the relay node most adjacent to MN is RN2. Since the access point AP has informed RN2 of MN's access information, RN2 has already stored this MN's access information.

The mobile node MN transmits to the closest relay node RN2 an access request message, since RN2 has already stored the access information of this MN; RN2 can immediately return an access authorization message to this MN.

The relay node RN2 transmits a route update message to the next relay node RN3, and RN3 in turn relays this route update message to the access point AP.

The above access point AP performs route updating, and stores the updated route information in the service agent SA connected with said AP.

After having stored the access information relating to this mobile node in the relay node RN1 for some time, the received access information is deleted, and this time period can be set by the relay node; or after receiving a deletion signal issued by the relay node RN2 which has current contact with said mobile node, the relay node RN1 deletes the stored access information relating to this MN.

Assuming that after the mobile node MN's movement, the relay node RN2 closest to MN does not have this MN's latest access information; this MN would transmit an access request message to its other adjacent relay nodes. If the other relay nodes adjacent to this MN do not have this MN's latest access information either, MN would transmit the access request message to RN2, and RN2 would then relay this access request message to other adjacent relay nodes, until this access request message is sent to the access point AP, hence following the flowchart of the prior art shown in Fig. 1 to accomplish the access.

It can be seen from the above two embodiments that, by the access methods of this invention, the access information originally located in the network's service agent is moved into a relay node adjacent to the mobile node, so that at the time of the mobile node's access there is no need to acquire the access authorization message via the access point, and it only needs to acquire the access authorization message from an adjacent relay node, so the access time for the mobile node is greatly reduced, and seamless access during the mobile node's movement is ensured.

## Claims

1. An access method for a multi-hop wireless network, to be used in a distributed multi-hop wireless network, said network comprising an access point (AP), a service agent connected to said access point (AP), at least one relay node (RN1, RN2, RN3) and at least one mobile node (MN), **characterized in that** said method comprises the following steps of:
(1) informing, by said at least one mobile node (MN) at the time of its registration in said wireless network, to at least one relay node (RN1) adjacent to said mobile node (MN) of access information for acquiring access authorization relevant to said mobile node (MN);
(2) storing the access information relevant to said mobile node (MN) in said at least one relay node (RN1) adjacent to said mobile node;
(3) informing, by said at least one relay node (RN1), to all the other relay nodes (RN2, RN3) adjacent to said mobile node (MN) of said access information relevant to said mobile node (MN), or informing, by said relay node (RN1), to at least one relay node (RN2) that is predicting the movement of said mobile node (MN) in its vicinity of said access information relevant to said mobile node (MN);
(4) transmitting by said mobile node (MN) an access request message to a relay node (RN2) adjacent to said mobile node (MN);
(5) returning to said mobile node (MN) an access authorization message by said adjacent relay node (RN2) having received the access request message;
(6) transmitting a route update message by said adjacent relay node (RN2) to a next relay node (RN3), and relaying said route update message in turn by said next relay node (RN3) to other relay nodes until said route update message is relayed to said access point (AP);
(7) performing route update by said access point (AP) or said service agent.

2. The access method according to claim 1, **characterized in that** the manner of said informing is by way of broadcast, multicast or unicast.

3. The access method according to claim 1, **characterized in that** in said step (3), the said relay node (RN1) stores the access information relevant to said mobile node (MN).

4. The access method according to claim 3, **characterized in that** after said relay node (RN1) has stored the access information relevant to said mobile node (MN), it deletes the received access information; or after having received a delete signal issued by a relay node (RN2) in current contact with said mobile node (MN), said relay node (RN1) deletes the received access information.

5. The access method according to claim 4, **characterized in that** after said relay node (RN1) has stored the access information relevant to said mobile node (MN), the time to delete the received access information is set by said relay node (RN1) or said access point (AP).

6. An access method for a multi-hop wireless network, to be used in a centralized multi-hop wireless network, said network comprising at least an access point (AP), a service agent connected to said access point (AP), at least one relay node (RN1, RN2, RN3) and at least one mobile node (MN), **characterized in that** said method comprises the following steps of:
(1) informing, by said at least one mobile node (MN) at the time of its registration in said wireless network, said access point (AP) of access information for acquiring access authorization relevant to said mobile node (MN);
(2) storing the access information relevant to said mobile node (MN) in said access point (AP) or said service agent;
(3) informing, by said access point (AP), all the relay nodes (RN1, RN2) adjacent to said mobile node (MN) of said access information relevant to said mobile node (MN), or informing, by said access point (AP), at least one relay node (RN2, RN3) that is predicting the movement of said mobile node (MN) in its vicinity of said access information relevant to said mobile node (MN);
(4) transmitting by said mobile node (MN) an access request message to a relay node (RN2) adjacent to said mobile node (MN) ;
(5) returning to said mobile node (MN) an access authorization message by said adjacent relay node (RN2) having received the access request message;
(6) transmitting a route update message by said adjacent relay node (RN2) to a next relay node (RN3), and relaying said route update message in turn by said next relay node (RN3) to other relay nodes until said route update message is relayed to said access point (AP);
(7) performing route update by said access point (AP) or said service agent.

7. The access method according to claim 6, **characterized in that** the manner of said informing is by way of broadcast, multicast or unicast.

8. The access method according to claim 6 or claim 7, **characterized in that** after said relay node (RN1) has stored the access information relevant to said mobile node (MN), it deletes the received access information; or after having received a delete signal issued by a relay node (RN2) in current contact with said mobile node (MN2), said relay node (RN1) deletes the received access information.

9. The access method according to claim 8, **characterized in that** after said relay node (RN1) has stored the access information relevant to said mobile node (MN), the time to delete the received access information is set by said relay node (RN1) or said access point (AP).

10. A centralized multi-hop wireless network, said network comprising at least an access point (AP), a service agent connected to said access point (AP), at least one relay node (RN1, RN2, RN3) and at least one mobile node (MN),
**characterized in that**
(1) said mobile node (MN) comprises means for informing said access point (AP) of access information for acquiring access authorization relevant to said mobile node (MN) at the time of its registration in said wireless network,
(2) said access point (AP) or said service agent comprises storing means for storing the access information relevant to said mobile node (MN);
(3) said access point (AP) comprises means for informing all relay nodes (RN1, RN2) adjacent to said mobile node (MN) of said access information relevant to said mobile node (MN), or said access point (AP) comprises means for informing at least one relay node (RN2) that is predicting the movement of said mobile node (MN) in its vicinity of said access information relevant to said mobile node (MN);
(4) said mobile node (MN) comprises means for transmitting an access request message to a relay node (RN2) adjacent to said mobile node (MN);
(5) said adjacent relay node (RN2) having received the access request message comprises means for returning to said mobile node (MN) an access authorization message;
(6) said adjacent relay node (RN2) comprises means for transmitting a route update message to a next relay node (RN3), said next relay node (RN3) comprising means for relaying said route update message in turn to other relay nodes until said route update message is relayed to said access point (AP);
(7) said access point (AP) or service agent comprises means for performing route update.

11. A distributed multi-hop wireless network, said network comprising at least an access point (AP), a service agent connected to said access point (AP), at least one relay node (RN1, RN2, RN3) and at least one mobile node (MN),
**characterized in that**
(1) said mobile node (MN) comprises means for informing at least one adjacent relay node (RN1) of access information for acquiring access authorization relevant to said mobile node (MN) at the time of its registration in said wireless network,
(2) said adjacent relay node (RN1) comprises storing means for storing the access information relevant to said mobile node (MN);
(3) said adjacent relay node (RN1) comprises means for informing all other relay nodes (RN2, RN3) adjacent to said mobile node (MN) of said access information relevant to said mobile node (MN), or said adjacent relay node (RN1) comprises means for informing at least one other relay node (RN2) that is predicting the movement of said mobile node (MN) in its vicinity of said access information relevant to said mobile node (MN);
(4) said mobile node (MN) comprises means for transmitting an access request message to a relay node (RN2) adjacent to said mobile node (MN);
(5) said adjacent relay node (RN2) having received the access request message comprises means for returning to said mobile node (MN) an access authorization message;
(6) said adjacent relay node (RN2) comprises means for transmitting a route update message to a next relay node (RN3), said next relay node (RN3) comprising means for relaying said route update message in turn to other relay nodes until said route update message is relayed to said access point (AP);
(7) said access point (AP) or service agent comprises means for performing route update.

## Patentansprüche

1. Zugangsverfahren für ein drahtloses Mehrsprungnetz zur Verwendung in einem verteilten drahtlosen Mehrsprungnetz, wobei dieses Netz einen Zugangspunkt (AP), einen mit dem Zugangspunkt (AP) verbundenen Dienstagenten, mindestens einen Weiterleitungsknoten (RN1, RN2, RN3) und mindestens einen Mobilknoten (MN) umfaßt, **dadurch gekennzeichnet, daß** dieses Verfahren folgende Schritte umfaßt:
(1) Informieren durch den mindestens einen Mobilknoten (MN) zur Zeit seiner Registrierung in dem drahtlosen Netz des mindestens einen dem Mobilknoten (MN) benachbarten Weiterleitungsknotens (RN1) über Zugangsinformationen zum Erlangen von für den Mobilknoten (MN) relevanten Zugangsberechtigung;
(2) Speichern der für den Mobilknoten (MN) relevanten Zugangsinformationen in dem dem Mobilknoten benachbarten mindestens einen Weiterleitungsknoten (RN1);
(3) Informieren durch den mindestens einen Weiterleitungsknoten (RN1) aller anderen dem Mobilknoten (MN) benachbarten Weiterleitungsknoten (RN2, RN3) über die für den Mobilknoten (MN) relevanten Zugangsinformationen oder Informieren durch diesen Weiterleitungsknoten (RN1) des mindestens einen Weiterleitungsknoten (RN2), der die Bewegung des Mobilknoten (MN) in seiner Nachbarschaft vorhersagt, über die für den Mobilknoten (MN) relevanten Zugangsinformationen;
(4) Übertragen durch den Mobilknoten (MN) einer Zugangsanforderungsnachricht zu einem dem Mobilknoten (MN) benachbarten Weiterleitungsknoten (RN2);
(5) Zurücksenden an den Mobilknoten (MN) einer Zugangsberechtigungsnachricht durch den benachbarten Weiterleitungsknoten (RN2) nach seinem Empfang der Zugangsanforderungsnachricht;
(6) Übertragen einer Leitwegaktualisierungsnachricht durch den benachbarten Weiterleitungsknoten (RN2) an einen nächsten Weiterleitungsknoten (RN3) und wiederum Weiterleiten der Leitwegaktualisierungsnachricht durch den nächsten Weiterleitungsknoten (RN3) an andere Weiterleitungsknoten, bis die Leitwegaktualisierungsnachricht zu dem Zugangspunkt (AP) weitergeleitet ist;
(7) Durchführen der Leitwegaktualisierung durch den Zugangspunkt (AP) oder den Dienstagenten.

2. Zugangsverfahren nach Anspruch 1, **dadurch gekennzeichnet, daß** die Art dieses Informierens über Rundsenden, Punkt-zu-Mehrpunktsenden oder Punkt-zu-Punkt-Senden stattfindet.

3. Zugangsverfahren nach Anspruch 1, **dadurch gekennzeichnet, daß** in dem Schritt (3) der Weiterleitungsknoten (RN1) die für den Mobilknoten (MN) relevanten Zugangsinformationen speichert.

4. Zugangsverfahren nach Anspruch 3, **dadurch gekennzeichnet, daß**, nachdem der Weiterleitungsknoten (RN1) die für den Mobilknoten (MN) relevanten Zugangsinformationen gespeichert hat, er die empfangenen Zugangsinformationen löscht oder nach seinem Empfang eines durch einen Weiterleitungsknoten (RN2) im laufenden Kontakt mit dem Mobilknoten (MN) ausgegebenen Löschungssignals der Weiterleitungsknoten (RN1) die empfangenen Zugangsinformationen löscht.

5. Zugangsverfahren nach Anspruch 4, **dadurch gekennzeichnet, daß**, nachdem der Weiterleitungsknoten (RN1) die für den Mobilknoten (MN) relevanten Zugangsinformationen gespeichert hat, die Zeit zum Löschen der empfangenen Zugangsinformationen durch den Weiterleitungsknoten (RN1) oder den Zugangspunkt (AP) eingestellt wird.

6. Zugangsverfahren für ein drahtloses Mehrsprungnetz zur Verwendung in einem zentralisierten drahtlosen Mehrsprungnetz, wobei dieses Netz mindestens einen Zugangspunkt (AP), einen mit dem Zugangspunkt (AP) verbundenen Dienstagenten, mindestens einen Weiterleitungsknoten (RN1, RN2, RN3) und mindestens einen Mobilknoten (MN) umfaßt, **dadurch gekennzeichnet, daß** dieses Verfahren folgende Schritte umfaßt:
(1) Informieren durch den mindestens einen Mobilknoten (MN) zur Zeit seiner Registrierung in dem drahtlosen Netz des Zugangspunkts (AP) über Zugangsinformationen zum Erlangen von für den Mobilknoten (MN) relevanter Zugangsberechtigung;
(2) Speichern der für den Mobilknoten (MN) relevanten Zugangsinformationen in dem Zugangspunkt (AP) oder dem Dienstagenten;
(3) Informieren durch den Zugangspunkt (AP) aller dem Mobilknoten (MN) benachbarten Weiterleitungsknoten (RN1, RN2) über die für den Mobilknoten (MN) relevanten Zugangsinformationen, oder Informieren durch den Zugangspunkt (AP) mindestens eines Weiterleitungsknoten (RN2, RN3), der die Bewegung des Mobilknotens (MN) in seiner Nachbarschaft vorhersagt, über die für den Mobilknoten (MN) relevanten Zugangsinformationen;
(4) Übertragen durch den Mobilknoten (MN) einer Zugangsanforderungsnachricht zu einem dem Mobilknoten (MN) benachbarten Weiterleitungsknoten (RN2);
(5) Zurücksenden zu dem Mobilknoten (MN) einer Zugangsberechtigungsnachricht durch den benachbarten Weiterleitungsknoten (RN2) nach seinem Empfang der Zugangsanforderungsnachricht;
(6) Übertragen einer Leitwegaktualisierungsnachricht durch den benachbarten Weiterleitungsknoten (RN2) an einen nächsten Weiterleitungsknoten (RN3) und wiederum Weiterleiten der Leitwegaktualisierungsnachricht durch den nächsten Weiterleitungsknoten (RN3) zu anderen Weiterleitungsknoten, bis die Leitwegaktualisierungsnachricht zu dem Zugangspunkt (AP) weitergeleitet ist;
(7) Durchführen einer Leitwegaktualisierung durch den Zugangspunkt (AP) oder den Dienstagenten.

7. Zugangsverfahren nach Anspruch 6, **dadurch gekennzeichnet, daß** die Art des Informierens über Rundsenden, Punkt-zu-Mehrpunkt-Senden oder Punkt-zu-Punkt-Senden stattfindet.

8. Zugangsverfahren nach Anspruch 6 oder 7, **dadurch gekennzeichnet, daß**, nachdem der Weiterleitungsknoten (RN1) die für den Mobilknoten (MN) relevanten Zugangsinformationen gespeichert hat, er die empfangenen Zugangsinformationen löscht; oder nach seinem Empfang eines durch einen Weiterleitungsknoten (RN2) im laufenden Kontakt mit dem Mobilknoten (MN2) ausgegebenen Löschungssignals der Weiterleitungsknoten (RN1) die empfangenen Zugangsinformationen löscht.

9. Zugangsverfahren nach Anspruch 8, **dadurch gekennzeichnet, daß**, nachdem der Weiterleitungsknoten (RN1) die für den Mobilknoten (MN) relevanten Zugangsinformationen gespeichert hat, die Zeit zum Löschen der empfangenen Zugangsinformationen durch den Weiterleitungsknoten (RN1) oder den Zugangspunkt (AP) eingestellt wird.

10. Zentralisiertes drahtloses Mehrsprungsnetz umfassend mindestens einen Zugangspunkt (AP), einen mit dem Zugangspunkt (AP) verbundenen Dienstagenten, mindestens einen Weiterleitungsknoten (RN1, RN2, RN3) und mindestens einen Mobilknoten (MN), **dadurch gekennzeichnet, daß**
(1) der Mobilknoten (MN) Mittel zum Informieren des Zugangspunkts (AP) über Zugangsinformationen zum Erlangen einer für den Mobilknoten (MN) relevanten Zugangsberechtigung zur Zeit seiner Registrierung in dem drahtlosen Netz umfaßt,
(2) der Zugangspunkts (AP) oder der Dienstagent Speichermittel zum Speichern der für den Mobilknoten (MN) relevanten Zugangsinformationen umfaßt;
(3) der Zugangspunkt (AP) Mittel zum Informieren aller dem Mobilknoten (MN) benachbarten Weiterleitungsknoten (RN1, RN2) über die für den Mobilknoten (MN) relevanten Zugangsinformationen umfaßt, oder der Zugangspunkt (AP) Mittel zum Informieren mindestens eines Weiterleitungsknoten (RN2), der die Bewegung des Mobilknotens (MN) in seiner Nachbarschaft vorhersagt, über die für den Mobilknoten (MN) relevanten Zugangsinformationen umfaßt;
(4) der Mobilknoten (MN) Mittel zum Übertragen einer Zugangsanforderungsnachricht zu einem dem Mobilknoten (MN) benachbarten Weiterleitungsknoten (RN2) umfaßt;
(5) der benachbarte Weiterleitungsknoten (RN2) nach seinem Empfang der Zugangsanforderungsnachricht Mittel zum Zurücksenden einer Zugangsberechtigungsnachricht zu dem Mobilknoten (MN) umfaßt;
(6) der benachbarte Weiterleitungsknoten (RN2) Mittel zum Übertragen einer Leitwegaktualisierungsnachricht zu einem nächsten Weiterleitungsknoten (RN3) umfaßt, wobei der nächste Weiterleitungsknoten (RN3) wiederum Mittel zum Weiterleiten der Leitwegaktualisierungsnachricht zu anderen Weiterleitungsknoten umfaßt, bis die Leitwegaktualisierungsnachricht zu dem Zugangspunkt (AP) weitergeleitet ist;
(7) der Zugangspunkt (AP) oder Dienstagent Mittel zum Durchführen der Leitwegaktualisierung umfaßt.

11. Verteiltes drahtloses Mehrsprungnetz umfassend mindestens einen Zugangspunkt (AP), einen mit dem Zugangspunkt (AP) verbundenen Dienstagenten, mindestens einen Weiterleitungsknoten (RN1, RN2, RN3) und mindestens einen Mobilknoten (MN), **dadurch gekennzeichnet, daß**
(1) der Mobilknoten (MN) Mittel zum Informieren mindestens eines benachbarten Weiterleitungsknotens (RN1) über Zugangsinformationen zum Erlangen einer für den Mobilknoten (MN) relevanten Zugangsberechtigung zur Zeit seiner Registrierung in dem drahtlosen Netz umfaßt,
(2) der benachbarte Weiterleitungsknoten (RN1) Speichermittel zum Speichern der für den Mobilknoten (MN) relevanten Zugangsinformationen umfaßt;
(3) der benachbarte Weiterleitungsknoten (RN1) Mittel zum Informieren aller anderen dem Mobilknoten (MN) benachbarten Weiterleitungsknotens (RN2, RN3) über die für den Mobilknoten (MN) relevanten Zugangsinformationen umfaßt, oder der benachbarte Weiterleitungsknoten (RN1) Mittel zum Informieren mindestens eines anderen Weiterleitungsknotens (RN2), der die Bewegung des Mobilknotens (MN) in seiner Nachbarschaft vorhersagt, über die für den Mobilknoten (MN) relevanten Zugangsinformationen umfaßt;
(4) der Mobilknoten (MN) Mittel zum Übertragen einer Zugangsanforderungsnachricht zu einem dem Mobilknoten (MN) benachbarten Weiterleitungsknoten (RN2) umfaßt;
(5) der benachbarte Weiterleitungsknoten (RN2) nach seinem Empfang der Zugangsanforderungsnachricht Mittel zum Zurücksenden einer Zugangsberechtigungsnachricht zu dem Mobilknoten (MN) umfaßt;
(6) der benachbarte Weiterleitungsknoten (RN2) Mittel zum Übertragen einer Leitwegaktualisierungsnachricht an einen nächsten Weiterleitungsknoten (RN3) umfaßt, wobei der nächste Weiterleitungsknoten (RN3) wiederum Mittel zum Weiterleiten der Leitwegaktualisierungsnachricht zu anderen Weiterleitungsknoten umfaßt, bis die Leitwegaktualisierungsnachricht an den Zugangspunkt (AP) weitergeleitet ist;
(7) der Zugangspunkt (AP) oder Dienstagent Mittel zum Durchführen einer Leitwegaktualisierung umfaßt.

## Revendications

1. Procédé d'accès pour un réseau sans fil à plusieurs bonds, destiné à être utilisé dans un réseau sans fil à plusieurs bonds distribué, ledit réseau comprenant un point d'accès (AP), un agent de service connecté audit point d'accès (AP), au moins un noeud de relais (RN1, RN2, RN3) et au moins un noeud mobile (MN), **caractérisé en ce que** ledit procédé comprend les étapes suivantes :
(1) information, par ledit au moins un noeud mobile (MN) au moment de son enregistrement dans ledit réseau sans fil, à au moins un noeud de relais (RN1) adjacent audit noeud mobile (MN), d'une information d'accès pour obtenir une autorisation d'accès concernant ledit noeud mobile (MN) ;
(2) enregistrement de l'information d'accès concernant ledit noeud mobile (MN) dans ledit au moins un noeud de relais (RN1) adjacent audit noeud mobile ;
(3) information, par ledit au moins un noeud de relais (RN1), à tous les autres noeuds de relais (RN2, RN3) adjacents audit noeud mobile (MN), de ladite information d'accès concernant ledit noeud mobile (MN) ou information, par ledit noeud de relais (RN1), à au moins un noeud de relais (RN2) qui prévoit le mouvement dudit noeud mobile (MN) dans son voisinage, de ladite information d'accès concernant ledit noeud mobile (MN) ;
(4) transmission par ledit noeud mobile (MN) d'un message de demande d'accès à un noeud de relais (RN2) adjacent audit noeud mobile (MN) ;
(5) envoi en retour audit noeud mobile (MN) d'un message d'autorisation d'accès par ledit noeud de relais adjacent (RN2) ayant reçu le message de demande d'accès ;
(6) transmission d'un message de mise à jour de route par ledit noeud de relais adjacent (RN2) à un noeud de relais suivant (RN3) et relayage dudit message de mise à jour de route par ledit noeud de relais suivant (RN3), à son tour, à d'autres noeuds de relais jusqu'à ce que ledit message de mise à jour de route soit relayé audit point d'accès (AP) ;
(7) exécution d'une mise à jour de route par ledit point d'accès (AP) ou ledit agent de service.

2. Procédé d'accès selon la revendication 1, **caractérisé en ce que** le mode de ladite information est la diffusion, la multidiffusion ou la monodiffusion.

3. Procédé d'accès selon la revendication 1, **caractérisé en ce que**, dans ladite étape (3), ledit noeud de relais (RN1) enregistre l'information d'accès concernant ledit noeud mobile (MN).

4. Procédé d'accès selon la revendication 3, **caractérisé en ce que**, après que ledit noeud de relais (RN1) a enregistré l'information d'accès concernant ledit noeud mobile (MN), il efface l'information d'accès reçue ; ou après avoir reçu un signal d'effacement envoyé par un noeud de relais (RN2) présentement en contact avec ledit noeud mobile (MN), ledit noeud de relais (RN1) efface l'information d'accès reçue.

5. Procédé d'accès selon la revendication 4, **caractérisé en ce que**, après que ledit noeud de relais (RN1) a enregistré l'information d'accès concernant ledit noeud mobile (MN), le moment pour effacer l'information d'accès reçue est fixé par ledit noeud de relais (RN1) ou ledit point d'accès (AP).

6. Procédé d'accès pour un réseau sans fil à plusieurs bonds, destiné à être utilisé dans un réseau sans fil à plusieurs bonds centralisé, ledit réseau comprenant au moins un point d'accès (AP), un agent de service connecté audit point d'accès (AP), au moins un noeud de relais (RN1, RN2, RN3) et au moins un noeud mobile (MN), **caractérisé en ce que** ledit procédé comprend les étapes suivantes :
(1) information, par ledit au moins un noeud mobile (MN) au moment de son enregistrement dans ledit réseau sans fil, dudit point d'accès (AP) indiquant une information d'accès pour obtenir une autorisation d'accès concernant ledit noeud mobile (MN) ;
(2) enregistrement de l'information d'accès concernant ledit noeud mobile (MN) dans ledit point d'accès (AP) ou ledit agent de service ;
(3) information, par ledit point d'accès (AP), à tous les noeuds de relais (RN1, RN2) adjacents audit noeud mobile (MN), de ladite information d'accès concernant ledit noeud mobile (MN) ou information, par ledit point d'accès (AP), à au moins un noeud de relais (RN2, RN3) qui prévoit le mouvement dudit noeud mobile (MN) dans son voisinage, de ladite information d'accès concernant ledit noeud mobile (MN) ;
(4) transmission par ledit noeud mobile (MN) d'un message de demande d'accès à un noeud de relais (RN2) adjacent audit noeud mobile (MN) ;
(5) envoi en retour audit noeud mobile (MN) d'un message d'autorisation d'accès par ledit noeud de relais adjacent (RN2) ayant reçu le message de demande d'accès ;
(6) transmission d'un message de mise à jour de route par ledit noeud de relais adjacent (RN2) à un noeud de relais suivant (RN3) et relayage dudit message de mise à jour de route par ledit noeud de relais suivant (RN3), à son tour, à d'autres noeuds de relais jusqu'à ce que ledit message de mise à jour de route soit relayé audit point d'accès (AP) ;
(7) exécution d'une mise à jour de route par ledit point d'accès (AP) ou ledit agent de service.

7. Procédé d'accès selon la revendication 6, **caractérisé en ce que** le mode de ladite information est la diffusion, la multidiffusion ou la monodiffusion.

8. Procédé d'accès selon la revendication 6 ou la revendication 7, **caractérisé en ce que**, après que ledit noeud de relais (RN1) a enregistré l'information d'accès concernant ledit noeud mobile (MN), il efface l'information d'accès reçue ; ou après avoir reçu un signal d'effacement envoyé par un noeud de relais (RN2) présentement en contact avec ledit noeud mobile (MN2), ledit noeud de relais (RN1) efface l'information d'accès reçue.

9. Procédé d'accès selon la revendication 8, **caractérisé en ce que**, après que ledit noeud de relais (RN1) a enregistré l'information d'accès concernant ledit noeud mobile (MN), le moment pour effacer l'information d'accès reçue est fixé par ledit noeud de relais (RN1) ou ledit point d'accès (AP).

10. Réseau sans fil à plusieurs bonds centralisé, ledit réseau comprenant au moins un point d'accès (AP), un agent de service connecté audit point d'accès (AP), au moins un noeud de relais (RN1, RN2, RN3) et au moins un noeud mobile (MN), **caractérisé en ce que** :
(1) ledit noeud mobile (MN) comprend un moyen pour informer ledit point d'accès (AP) d'une information d'accès pour obtenir une autorisation d'accès concernant ledit noeud mobile (MN) au moment de son enregistrement dans ledit réseau sans fil ;
(2) ledit point d'accès (AP) ou ledit agent de service comprend un moyen d'enregistrement pour enregistrer l'information d'accès concernant ledit noeud mobile (MN) ;
(3) ledit point d'accès (AP) comprend un moyen pour informer tous les noeuds de relais (RN1, RN2) adjacents audit noeud mobile (MN) de ladite information d'accès concernant ledit noeud mobile (MN) ou ledit point d'accès (AP) comprend un moyen pour informer au moins un noeud de relais (RN2) qui prévoit le mouvement dudit noeud mobile (MN) dans son voisinage de ladite information d'accès concernant ledit noeud mobile (MN) ;
(4) ledit noeud mobile (MN) comprend un moyen pour transmettre un message de demande d'accès à un noeud de relais (RN2) adjacent audit noeud mobile (MN) ;
(5) ledit noeud de relais adjacent (RN2) ayant reçu le message de demande d'accès comprend un moyen pour envoyer en retour audit noeud mobile (MN) un message d'autorisation d'accès ;
(6) ledit noeud de relais adjacent (RN2) comprend un moyen pour transmettre un message de mise à jour de route à un noeud de relais suivant (RN3), ledit noeud de relais suivant (RN3) comprenant un moyen pour relayer ledit message de mise à jour de route, à son tour, à d'autres noeuds de relais jusqu'à ce que ledit message de mise à jour de route soit relayé audit point d'accès (AP) ;
(7) ledit point d'accès (AP) ou agent de service comprend un moyen pour exécuter une mise à jour de route.

11. Réseau sans fil à plusieurs bonds distribué, ledit réseau comprenant au moins un point d'accès (AP), un agent de service connecté audit point d'accès (AP), au moins un noeud de relais (RN1, RN2, RN3) et au moins un noeud mobile (MN), **caractérisé en ce que** :
(1) ledit noeud mobile (MN) comprend un moyen pour informer au moins un noeud de relais adjacent (RN1) d'une information d'accès pour obtenir une autorisation d'accès concernant ledit noeud mobile (MN) au moment de son enregistrement dans ledit réseau sans fil ;
(2) ledit noeud de relais adjacent (RN1) comprend un moyen d'enregistrement pour enregistrer l'information d'accès concernant ledit noeud mobile (MN) ;
(3) ledit noeud de relais adjacent (RN1) comprend un moyen pour informer tous les autres noeuds de relais (RN2, RN3) adjacents audit noeud mobile (MN) de ladite information d'accès concernant ledit noeud mobile (MN) ou ledit noeud de relais adjacent (RN1) comprend un moyen pour informer au moins un autre noeud de relais (RN2) qui prévoit le mouvement dudit noeud mobile (MN) dans son voisinage de ladite information d'accès concernant ledit noeud mobile (MN) ;
(4) ledit noeud mobile (MN) comprend un moyen pour transmettre un message de demande d'accès à un noeud de relais (RN2) adjacent audit noeud mobile (MN) ;
(5) ledit noeud de relais adjacent (RN2) ayant reçu le message de demande d'accès comprend un moyen pour envoyer en retour audit noeud mobile (MN) un message d'autorisation d'accès ;
(6) ledit noeud de relais adjacent (RN2) comprend un moyen pour transmettre un message de mise à jour de route à un noeud de relais suivant (RN3), ledit noeud de relais suivant (RN3) comprenant un moyen pour relayer ledit message de mise à jour de route, à son tour, à d'autres noeuds de relais jusqu'à ce que ledit message de mise à jour de route soit relayé audit point d'accès (AP) ;
(7) ledit point d'accès (AP) ou agent de service comprend un moyen pour exécuter une mise à jour de route.
